# EUROPEAN PATENT APPLICATION

(11) **EP 2 843 583 A1**
(43) Date of publication of application: **04.03.2015**
(21) Application number: 12875555.0
(22) Date of filing: 27.04.2012
(51) Int. Cl.: G06F 21/60, H03M 7/00

(54) **DIGITAL INFORMATION PROTECTION METHOD**

(71) Applicant: Pryakhin, Evgeniy Ivanovich, St.Petersburg 197136 (RU); Larionova, Ekaterina Vladimirovna, St.Petersburg 198332 (RU); Pirajnen, Viktor Jur'evich, St.Petersburg 196602 (RU)
(72) Inventor: GAR'KUSHEV, Aleksandr Jur'evich, St.Petersburg 195271 (RU); PRYAKHIN, Evgeniy Ivanovich, St. Petersburg 197136 (RU); LARIONOVA, Ekaterina Vladimirovna, St. Petersburg 198332 (RU); PIRAJNEN, Viktor Jur'evich, St. Petersburg 196602 (RU)
(74) Representative: Modiano, Micaela Nadia
(86) International application number: PCT/RU2012/000335
(87) International publication number: WO 2013/162402

(57) **Abstract**

The invention generally relates to the information protection means against unauthorized survey, content modification, information content intactness manipulation during the information storage and transfer and it can be implemented in software, hardware and hard/software means of multilevel information protection (including cryptographic one) against survey and means of information control and information intactness recovery. The proposed method is designed to protect digital information of any type, namely - text, graphics, video, audio, executive files etc., as well as to protect analog information that was earlier converted into digital form by technical means.

The essence of the method is that for encoding cryptographic methods of both symmetric and asymmetric encryption are used with the following distinctive feature. A user converts information available in any form into digital form. Bit information (i.e. digital information that needs to be protected or analog one converted into digital form) is encoded using the plurality of individual encoding values obtained by random mix of general plurality of values. The general plurality of values is formed out of unbound with each other initial pluralities of values. For encoding any pluralities of values of codes and symbol mappings may be used both known (UNICODE) and those created by user and based upon binary, decimal, hexadecimal and other systems. Every encoded symbol may correspond to different values from one or several pluralities that are not bound to each other. The proposed protection method can be implemented both in virtual form using Cloud Computing technology and in physical form, when encryption and decryption blocks are implemented in one environment that is physically protected against unauthorized access, writing and copying.

Technical result of the proposed invention is widening the field of use, improved reliability and security of the digital and analog information protection method.

## Description

The invention generally relates to the information protection means against unauthorized survey, content modification, information content intactness manipulation during the information storage and transfer and it can be implemented in software, hardware and hard/software means of multilevel information protection against survey and means of information control and information intactness recovery. The proposed method is designed to protect digital information of any type, namely - text, graphics, video, audio, executive files etc., as well as to protect analog information that was earlier converted into digital form by technical means.

Modern technologies provide an opportunity to transfer and store large amount of information. This has a backside as well. Information becomes more and more vulnerable for different reasons:
- the amount of data to store and transfer rise;
- the user community having access to computer resources, software and data widen;
- computer system exploitation modes become more complicated.

Thus the information protection against unauthorized access while storing and transferring becomes more and more challenging task. The essence of this problem is the everlasting fight between computer information protection specialists and their "opponents".

Different systems and devices for information protection and transfer are known. For example, the Russian Patent No. 2370898 describes the method of information protection against unauthorized access in communication systems. Technical result is interception prevention of key information near receiving antenna. The concept of invention is that an array of random numbers that is put as a basis of symmetric encryption key generation is created in both transferring and receiving communication points by measuring random time necessary for pilot radio-signal to reach the receiver. The keys are generated by means of irreversible transformation of large plurality of measurements for time necessary for a pilot radio-signal to reach the receiver that is collected within specified time period of information protection technical means working time. The collected plurality of measurements is constantly appended with subsequent measurement results.

This method has the following disadvantages: missing protection against interferences, both natural and intentional, as well as against tampering in communication channels, the lack of precious evaluation of false information imposure, thus resulting in the absence of guarantee the decryption key is acquired intact.

The Russian Patent No. 2423800 describes the information protection method based upon bidirectional transmission and the following detection of pilot radio-signals carrying time stamps of their generation bound to preliminarily tabulated time scales and coming from communication points located at both ends of the radio-line and upon irreversible mathematical conversion of digital arrays, message encryption and decryption with a key, with a difference that mutual recognition procedure for information exchange participants is carried out and time scales for communication devices of every participant are synchronized, information protection tool working time period is set during which both radio-line ends collect two coinciding arrays of binary equivalents of digitized measurement results for random natural process of received pilot signal phase change that is a superposition of partial rays outspread in multi-ray environment with unpredictable phase progression, and irreversible mathematical conversion equal at both ends of he radio line are applied to the collected binary equivalent arrays, thus forming at both the transferring and the receiving ends the equal copies of the symmetric encryption key, when the collected binary equivalent arrays are appended with binary equivalents of digitized results of next pilot radio-signal phase measurements, and as the mechanism of symmetric encryption key distribution the property of radio wave multi-ray propagation correlation is used.

The well-known patent offers the protection against interference at communication lines by synchronizing the mutual recognition operation for information exchange participants by special time scales, because mathematical operations are carried out synchronized with binary analog measurement accumulation, thus they are carried out by certain algorithm that can be mathematically discovered and decrypted. Besides, users must have complicated supersensitive equipment that may fail thus making protection and transfer of protected information impossible.

The invention under Russian Patent Application No. 2001117145 offers the protection method based upon generation of a key to be stored in memory of an external device capable to connect to a computer, information decryption, with the difference that the key is generated right at the external device and the information is encrypted with the key right at the same device.

Key generation in this case is carried out with use of pseudorandom array signals and signals of external random influence with following automatic key verification for the absence of coinciding with keys, which are stored with those stored in the external device memory.

The key is stored in an external device memory, capable to connect to computer, with information decryption using the key in the external device with the difference that the key generation during the information exchange between end users is carried out by the external device of one of users, encrypting it with a system key that was earlier recorded into the system key memory in all the end user devices of the same series, with the decrypted key transmitted to the second user following by decrypting it at the second user's device, thus the information is decrypted by the key in external devices of every user.

Herein key generation is carried out using pseudorandom array signals and external random influence signals with subsequent automatic key verification for the absence of coinciding with keys, which are stored with those stored in the external device memory.

It is proposed that the device should be implemented in single environment protected from unauthorized access, for example, in a one-chip microcontroller.

This method has a disadvantage, it cannot be used in case of a force-majeure situation such as end user equipment failure or the same of some segments of the equipment. Besides, this method implements the controlling sequence (key) that is either shorter than or matches the length of message, and precious evaluation of false information imposure is missing, thus rising the chance of break-in or calculating the bypass way to decrypt the protected information.

The Russian Patent No. 2254685 describes the method of information encrypting conversion.

The information encrypting conversion method with a feature that prior to starting the encryption all possible non-recurrent alphabet combination values uᵢ are randomly with random number generator are written into a code table with N lines, and every line uᵢ of the address table Tₐ has a number of line i of the code table Tₖ, where an alphabet combination value uᵢ is written, and where N is the size of alphabet coinciding with the number of lines in code and address tables Tₖ and Tₐ, while uᵢ is the initial combination to be encrypted, and to fill yet another i^{th} line in a code table Tₖ, where i is the value from 1 to N, yet another alphabet combination value is acquired from random number generator to be compared first with every combination value out of i-1 already written into the code table Tₖ, and in case of no coincidence with any written earlier alphabet combinations yet another alphabet combination uᵢ is added to the i^{th} line of the code table Tₖ, and during the encryption out of the line uᵢ of the address table Tₐ the initial combination address A(uᵢ) in the code table Tₖ is read, as well as the value of the encrypted combination vᵢ of the initial alphabet combination uᵢ with conversion parameter value ξᵢ is equal to the alphabet combination value stored in line A(vᵢ) of the code table Tₖ, the address of which is defined as A(vᵢ)=A(uᵢ)+ξᵢ, by number module N, the encrypted combination value vᵢ is read from the code table Tₖ line with address A(vᵢ), during the decryption of the encrypted combination vᵢ with conversion parameter value ξᵢ the combination value stored in line with address A(uᵢ) in code table Tₖ is determined, and the address A(uᵢ)=A(vᵢ)-ξᵢ by number module N, and the combination value uᵢ is read from the code table Tₖ with address A(uᵢ).

Likewise, the abovementioned method cannot be implemented in case of force-majeure situation such as end user equipment failure or the same of equipment segments; controlling sequence (key) that is either shorter than or matches the message length. Besides, this method may need significant equipment capabilities, including the same of computer, still keeping the process complicated and slow thus making it impractical.

The closest to the proposed invention by the combination of essential features is the method of item marking for the purpose of identification as described by under Russian Patent Application No. 2011111052, taken by authors as prototype. One aspect of the known invention is the method of code message formation and its encryption. The prototype is based upon the principle of the encoding system formation on binary basis with 0 and 1, and it is accepted that "1" means the presence while "0" means the absence of laser influence imprinting. Any bit information can be encoded, including Latin letters, digits, punctuation marks, national fonts, pseudo graphical symbols etc., representing in general an array of symbols. Any symbol out of this array can be represented as a multi-digit combination of 0 and 1. For example, eight-digit symbol code system can be used, and then it looks like 00000000, 00000001, 00000010 etc.

After placing a single symbol with a local heat spot source the dimensions of the occupied area are 50x8=400mkm width and 50mkm height with imprint diameter 50mkm. A text page with 30 lines 80 symbols each occupies the area 32x1.5mm.

Any file can be represented in symbol format - text, graphic, sound etc.

The essence of the technical solution is that encryption of the information written as an encoded message on the surface of an item is carried out by individual code arrays formation out of total array of symbols. An individual code array is the total code array with components randomly mixed.

The known method discloses only one method of encoding based upon custom individual code systems, created by user, and it is for marking metal items, and it does not suggest protection of digital information represented in different ways. The known method is just one particular case of the proposed invention for information encoding and protection, because it does not provide embedded coding systems and/or their composition.

It is known that cryptographic protection methods use different ways to generate pseudorandom sequences to be processed both in encryption and decryption points controlled by some secret key. Herein processing time rises significantly with rise of encryption depth. The encryption depth is determined by ratio between the volume of the encrypting sequence (key) and the volume of the transferred information. It is known the transferred information is vulnerable for interception and the information protection is provided by deep encryption that is based upon the encryption keys (private and/or public) that are known to parties.

The object of the proposed invention is to create such a method of protection for digital information represented in different forms that would keep all the advantages of symmetric encryption, and at the same time that would allow controlling information intactness (preventing false information imposure), protection against reading confidential information from the system; implementing steady and fast an information protection method keeping multilevel deep encryption uncompromised.

Technical result of the proposed invention is to widen field of use, to improve reliability and security of the digital information protection method.

To implement the digital information protection method a hard/software system is used, and a user only has access to the interface of a system that is protected against copying, modification or transferring in parts or entirely.

To implement the claimed method in a virtual form cloud computing technologies are used allowing user access to coding options and protecting against intentional destructive influence on information and an encoding system.

To implement the claimed method in a physical form encoding and decoding blocks are implemented in one environment that is physically protected against unauthorized access, writing and copying.

The claimed method belongs to means providing information encoding, protection and decoding different kinds and using unique multilevel encoding methods, including these of both symmetric and asymmetric encryption.

For encoding the following cryptographic methods of symmetric encryption are used with the following distinctive features. A user converts information of any kind into digital form. Bit information (i.e. digital information needing protection or analog one converted into digital form) is encoded using plurality of individual encrypting values obtained by random mix of general plurality of values. The general plurality of values is formed out of unbound initial arrays of values. For encoding any pluralities of values of codes and symbols mapping can be used, including both known (UNICODE) and user-made ones based on binary, decimal, hexadecimal and other systems. Any encoded symbol may correspond to different values from one or several pluralities that are not bound to each other, too. That means no value of one plurality can be obtained out of one or several values of another plurality by any mathematical, logical or other methods. Encoding pluralities can be enclosed, i.e. the encoded information can be encoded again n times with pluralities of encoding values or their composition, i.e. code in code. Coding pluralities composition is when every symbol corresponds to several values out of pluralities, one out of each plurality, with values assigned randomly, thus excluding the brute force attack method of both common and uncommon values.

Encoding is possible for any digital information. It is known that usually information encoded or encrypted mathematically can be calculated thus also decrypted fully or in parts. Exclusion of mathematical methods for selecting controlling sequence (key) in proposed invention results from use of random values and randomization on individual plurality creation, thus significantly improving the system reliability. After composing of encoding values pluralities every symbol of the encoded information corresponds to many unbound random values from these pluralities having different bit length. The amount of enclosures and compositions is not limited and can be combined pre-assigned or randomly. Thus the symmetric encoding system implements asymmetric encryption principles.

The realization is as follows. A user specifies coding conditions in a software system, implementing principles of the developed method and then loads the information that needs to be encrypted. Then encryption is created automatically to be written in a bit form. User only has access to interface but not the software system itself. That means a user has information to be protected, and after loading and processing it the user has an encrypted bit message. The software system is protected against copying, modification, or transferring in parts or entirely. Thus neither user nor potential intruder have any opportunity to disclose either encryption algorithm or controlling sequence (the key). The controlling sequence can be either of equal length to the information to be encrypted or be longer, thus assuring the message authentication and information intactness control (preventing false information imposure). As a result the system is risk-free against break-in, decryption, false information imposure and its degree of protection is the highest possible.

The information protection principle is as follows:
There exists a message consisting of n symbols (a₁, b₁, ..., z₁) that has m repetitions of symbols (a₁, a₂, ..., aₘ). There exists the amount of pluralities Aᵢ, equal to Q of assigning to the message symbols (a₁, b₁, ..., z₁) randomly the encoding values out of Aᵢ plurality, where i belongs to the multitude (1, ..., Q). Setting the correspondence between the code values and the symbols in pluralities (A₁, ..., Aᵢ) is carried out randomly. The first symbol a₁ is randomly assigned to a value out of the plurality Aᵢ. The symbol aₙ is assigned to a value out of the plurality Aᵢ₋₁, and the selection of a plurality within the range (A₁, ..., Aᵢ) is made randomly either. Likewise other symbols (b₁, c₁, ..., z₁) gain their values. At the same time the same symbol aₙ in different parts of the message can be assigned to a value out of the plurality A₁ β times, and defining the amount of β times of symbol aₙ repeating is made randomly either.

The table 1 represents examples of individual encoding plurality variants within the range from Q₁ to Q₃ for the message having the message symbols.

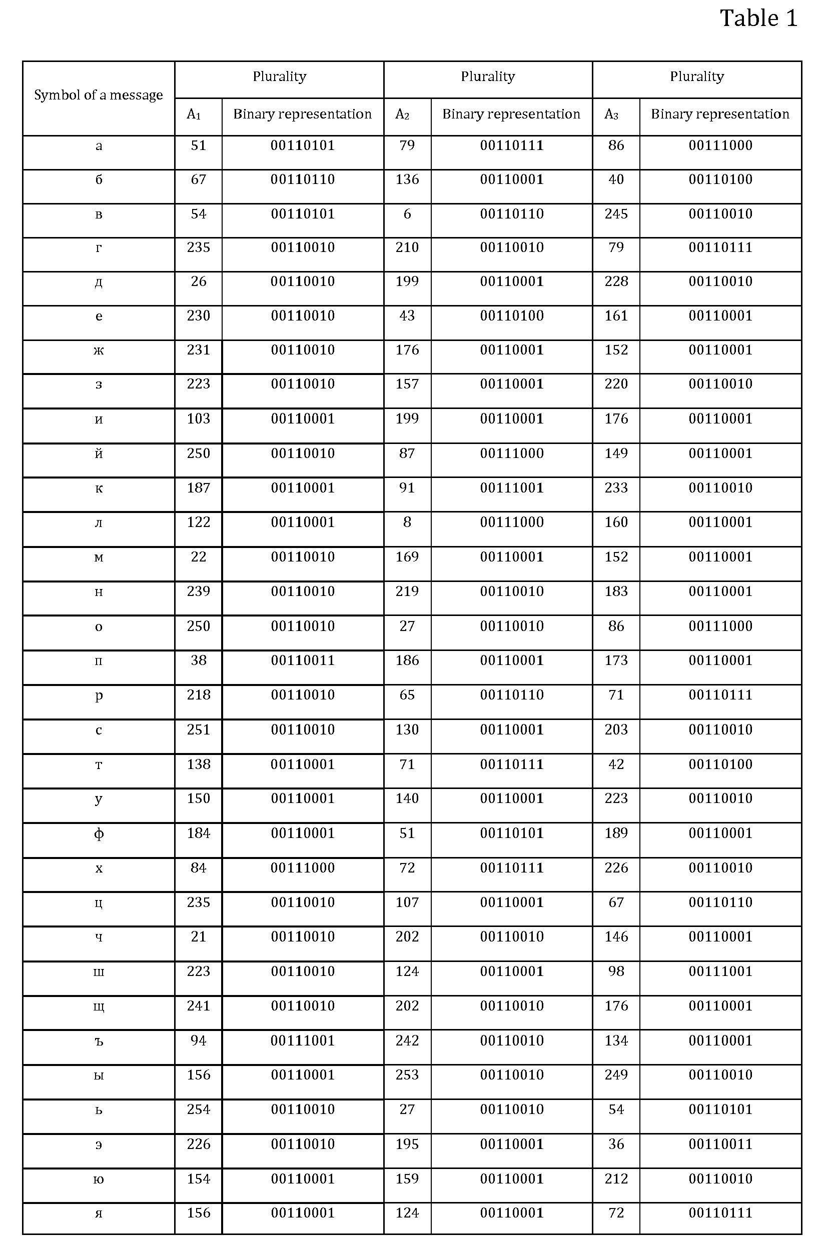

Here it is seen, that, for example, the symbol "a" in different pluralities Aᵢ may correspond to any digital value that is different from values assigned in any other plurality Aᵢ₋₁. For example, the plurality A₁ assigns value 51 to the symbol "a", while the plurality A₂ assigns the value 79 to the symbol "a" etc. Thus, the encoding results in randomized sequence of encrypting plurality values independent from particular symbol statistics or symbols of the initial information.

The given example limits the area of value assignment within natural numbers (particular case). The system does not have limitations of this kind: the information user may set variants of assigning different values to symbols, the values may belong to the multitudes of natural, integer numbers, real numbers and other multitudes; also letters, national fonts, pseudo graphics etc.

As example, we encrypt the following information keeping all kinds of fonts, symbol modifications, punctuation, reserved symbols, spaces and word wraps. For convenience we set the beginning and the end of the message as //Message begins and //Message ends:
//Message begins
   1. Encryption - is data conversion into unreadable form using encryption-decryption keys.
   2. Cryptography - is the science about the methods of information conversion (encryption) aimed to protect it against unauthorized users (encryption development).
   3. Cryptanalysis - is the science (and common practice) about methods and ways of the encrypted information disclosure (attacks against encryption).
//Message ends

To generate a general plurality of first stage (combination of individual pluralities) for every encrypted symbol a combination of controlling values was built randomly. For example, one of individual pluralities represents Russian Alphabet by user's selection, including uppercase and lowercase letters. The message contains 47 symbols while the alphabet has 64 symbols. The table 2 represents a fragment of such plurality.

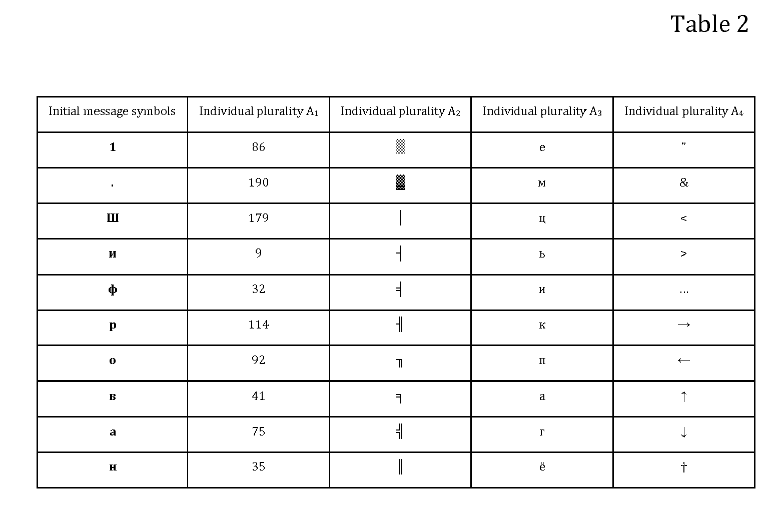

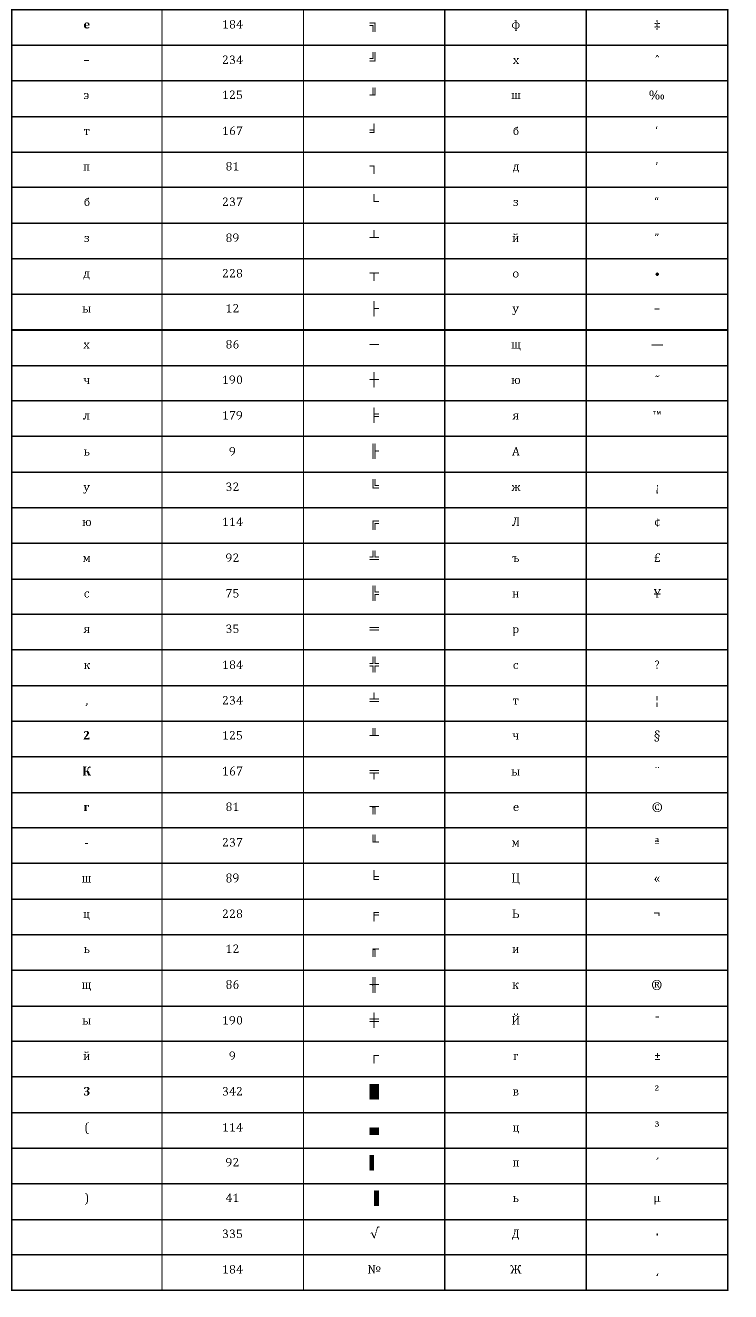

Thus four pluralities were used that are not bound to each other anyhow. To form the general plurality of the first stage bit code tables were used as well as pseudo graphical symbols of different operating systems, reserved symbols and user's custom number multitudes. The system allows unlimited amount of individual pluralities.

The result of the message conversion after use of the first stage general plurality is represented as follows:

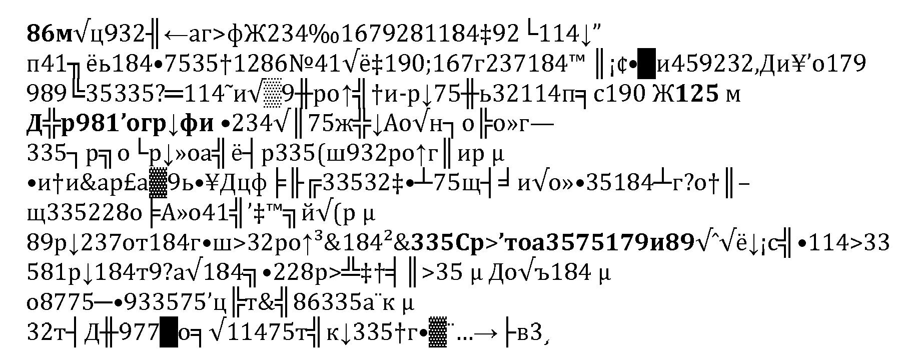

Given the example of a single symbol in a message one can see different pluralities of values including the general one assign different symbol values to the same symbol. The example of the Table 2 with value pluralities demonstrates that the symbol "c" of the message has following values in general plurality of the first order

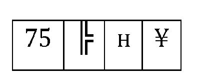

Such values are an individual case for this plurality of values and on the upcoming random value generation they change. The value pluralities selection will be randomized. First stage general plurality value conversion into the system of bit information is carried out in a way that the first stage general plurality bit values mapping would be randomized, too. The amount of bits per symbol for one particular symbol as well as for symbols and values in entire encrypted message is randomized.

The result of encoding using the composition and the enclosure of pluralities is as follows:

The proposed system may be implemented using various technologies including the technology of Cloud Computing. In this case the following services are involved - Software as a service (SaaS) and Desktop as a Service (DaaS).

"Software as a service" is a software encryption system model that allows a user access to the system interface by Internet or other networks.

"Desktop as a service" is a model of work that allows users to have ready-to-work virtual workplace that every user can customize according to one's needs. A user utilizes processing power of an external server rather than the same of his own personal computer. This solves the processing speed problem during the multilevel deep encryption as well as the problem of the encryption program interception, as the user loads the information for encryption to the external server and gets back only the encrypted data.

Never-the-less to further improve security and information protection the technology "Everything as a service" (EaaS) can be used - a model of work that combines elements of such technological solutions as "Software as a service" and "Infrastructure as a Service" (IaaS), that is providing miscellaneous computer infrastructure such as servers, data storage systems, network equipment, software to control these resources. "Platform as a Service" (PaaS) is the model of work that is providing a platform with specified features to develop, test, implement and support web-applications etc. "Data as a service", "Workplace as a Service", when unlike in case with DaaS, a user only has access to software, while all the calculations take place in his computer - or other similar technologies using shared or personal resources.

Such model of implementation allows efficient protection for both the information and the system against harmful attacks, because users do not possess software. Besides, this concept lowers expenses on information system implementation.

Other implementation methods allow adding encrypted information to the information carriers, i.e. any material item or environment containing or carrying information and for a long time able to keep the written information within its structure, i.e. various items (materials, parts, pieces, items, documents) and devices and carriers of digital information.

Fields of use:
1. Applying protected information to materials, parts, pieces, items by different methods in a form of a message:
   a. Defense industry - marking for the purpose of weapon and ammunition accounting and control.
   b. Nuclear Power plants - marking for the purpose of nuclear material accounting and relocation control.
   c. Governmental institutions - use of the technology and the equipment during manufacturing for protection against falsification of passports, identification cards and other documents.
   d. Protection of securities, bank notes and documents, etc.
   e. Aircraft industry - marking and identification of airplane parts, engines and other equipment.
   f. Food industry - product persistent marking for the purpose of dating, including line production.
   g. Car industry - marking car parts for the purpose of accounting and protection against counterfeit.
   h. Machine-tool industry - making dials, scales, information labels marking.
   i. Jewelry industry - applying marking during jewelry item production also by assay supervision inspections for noble metal items marking and identification.
   j. Arts and crafts - for artwork protection.
2. Information protection during correspondence or communication of information on paper or similar carriers.
3. Protection of information at miscellaneous digital carriers - encoded information is kept in digital form, level of protection remains unchanged.
4. Protection of information during its transmission by wired and wireless networks, including Internet.

## Claims

**1.** Digital information protection method that includes use of individual code tables with the distinctive feature that
- individual encoding values are obtained by means of random mixing of the general plurality of values, that is formed out of initial encoding value pluralities, which are not bound to each other,
- every encoded symbol can correspond to different values from one or several pluralities taking into account that pluralities are not bound to each other and no value from one plurality can be obtained out of one or several values from another plurality either by mathematical, logical or any other methods,
- mapping of symbols and the encoded values in individual pluralities (A₁,...,A_{q}) is randomized, thus symbol aₙ is assigned with a value from the plurality A_{q-1}, and the plurality selection from the range (A₁,...,A_{q}) is randomized either.

**2.** The method according to claim 1 with the distinctive feature that encoding pluralities can be enclosed to each other, i.e. the encoded information can be encoded n more times in a pluralities of encoding values or their composition (code in code).

**3.** The method according to claim 2 with the distinctive feature that the controlling sequence can be either of equal length to the length of the encoded information or be longer, thus assuring message authentication and information intactness control (protection against false information imposure).

**4.** The method according to claim 4 with the distinctive feature that for the method implementation a hard/software system is used where a user only has access to the system interface that is protected against copying, modification or transferring in fragments or entirely.

**6.** The method according to claim 5 with the distinctive feature that to implement the method in virtual form cloud computing technologies are used providing a user with encoding opportunities and preventing intentional destructive influence upon the information and the encoding system.

**7.** The method according to claim 6 with the distinctive feature that to implement the method in physical form encoding and decoding blocks are made in one environment that is physically protected against unauthorized access, copying and writing.
